# EUROPEAN PATENT APPLICATION

(11) **EP 4 564 534 A1**
(43) Date of publication of application: **04.06.2025**
(21) Application number: 23845683.4
(22) Date of filing: 28.07.2023
(51) Int. Cl.: H01M 10/6557, H01M 10/647, H01M 10/613, H01M 10/6568, H01M 10/6566, H01M 10/655

(54) **HEAT EXCHANGER, BATTERY PACK, AND VEHICLE**

(30) Priority: 29.07.2022 CN 202222002100 U; 29.07.2022 CN 202222010868 U; 29.07.2022 CN 202222011268 U
(71) Applicant: BYD Company Limited, Shenzhen, Guangdong 518118 (CN)
(72) Inventor: WU, Yanfeng, Shenzhen, Guangdong 518118 (CN); WANG, Xiao, Shenzhen, Guangdong 518118 (CN); ZHANG, Shun, Shenzhen, Guangdong 518118 (CN); YOU, Yueqiu, Shenzhen, Guangdong 518118 (CN); ZHENG, Weixin, Shenzhen, Guangdong 518118 (CN)
(74) Representative: Taor, Simon Edward William
(86) International application number: PCT/CN2023/109816
(87) International publication number: WO 2024/022479

(57) **Abstract**

A vehicle, comprising a battery pack that comprises a heat exchanger. The heat exchanger comprises a first heat exchange section and two second heat exchange sections; the first heat exchange section is provided with at least one first heat exchange flow channel, each second heat exchange section is provided with at least one second heat exchange flow channel, and the volume proportion of the at least one second heat exchange flow channel in the second heat exchange section is greater than that of the first heat exchange flow channel in the first heat exchange section.

## Description

### CROSS-REFERENCE TO RELATED APPLICATIONS

This application claims priority to and benefits of Chinese Patent Application No. "202222010868.2" on July 29, 2022 and entitled "HEAT EXCHANGER, BATTERY PACK, AND VEHICLE", Chinese Patent Application No. "202222002100.0" filed on July 29, 2022 and entitled "BATTERY DEVICE, BATTERY PACK, AND VEHICLE", and Chinese Patent Application No. "202222011268.8" filed on July 29, 2022 and entitled "BATTERY PACK AND VEHICLE WITH BATTERY PACK". The entire of the above-referenced applications is incorporated herein by reference.

### FIELD

The present disclosure relates to the technical field of batteries, and in particular, to a heat exchanger, a battery pack, and a vehicle.

### BACKGROUND

In a related art, cells in a battery pack often have problems of low heat dissipation efficiency and uneven heat dissipation between different parts. Low heat dissipation efficiency or different heat dissipation degrees between the cells will lead to thermal expansion of some cells, which can limit an overall fast charging capability of the battery pack. A high-rate fast charging current strategy needs to be set in combination with temperature of the cells. Over-high local temperature of the cells will limit settings of the fast-charging policy to limit an overall fast charging capability. However, in the related art, a cooling device of the battery pack cannot effectively dissipate heat of a main heat generating area of the battery pack, cannot ensure evenness of the temperature of the battery pack, and causes local overheating easily.

### SUMMARY

The present disclosure aims to solve at least one of technical problems in a related art. Therefore, a first objective of the present disclosure is to provide a heat exchanger, which has a good heat exchange capability.

A second objective of the present disclosure is to provide a battery pack, including the foregoing heat exchanger and a cell.

A third objective of the present disclosure is to provide a vehicle, including the foregoing battery pack.

The heat exchanger according to an embodiment in a first aspect of the present disclosure includes a first heat exchange section and two second heat exchange sections. The two second heat exchange sections are respectively connected to two ends of the first heat exchange section in a first direction. The first heat exchange section is provided with at least one first heat exchange flow channel. The second heat exchange section is provided with at least one second heat exchange flow channel. A volume proportion of the second heat exchange flow channel in the at least one second heat exchange section is greater than that of the first heat exchange flow channel in the first heat exchange section.

In the heat exchanger according to the present disclosure, the volume proportion of the second heat exchange flow channel in the at least one second heat exchange section is greater than that of the first heat exchange flow channel in the first heat exchange section, a heat exchange capability of the second heat exchange section is higher than that of the first heat exchange section, and heat exchange of the second heat exchange section is increased to facilitate improving heat dissipation efficiency of an end portion of a cell purposefully.

In some embodiments, the volume proportion of the second heat exchange flow channel in each second heat exchange section is greater than that of the first heat exchange flow channel in the first heat exchange section.

In some embodiments, multiple first heat exchange flow channels are provided, multiple second heat exchange flow channels are provided, and a quantity of the first heat exchange flow channels is less than that of the second heat exchange flow channels of the at least one second heat exchange section.

In some embodiments, multiple first heat exchange flow channels are provided, and multiple second heat exchange flow channels are provided. The multiple first heat exchange flow channels are arranged in a second direction. The multiple second heat exchange flow channels are arranged in the second direction. The second direction is perpendicular to the first direction.

In some embodiments, structural strength of the first heat exchange section is higher than that of the at least one second heat exchange section.

In some embodiments, a portion of the first heat exchange section corresponding to the at least one second heat exchange flow channel is of a solid structure.

In some embodiments, a wall thickness of the at least one first heat exchange flow channel is greater than that of the at least one second heat exchange flow channel.

In some embodiments, each second heat exchange flow channel and each first heat exchange flow channel extend along a straight line of the first direction.

In some embodiments, each first heat exchange section is spliced with the corresponding second heat exchange sections.

In some embodiments, the first heat exchange section and each second heat exchange section are respectively extrusion molding pieces.

The battery pack according to an embodiment in a second aspect of the present disclosure includes a cell and a heat exchanger. The heat exchanger is the heat exchanger according to the foregoing embodiments. The heat exchanger is configured to perform heat exchange on the cell.

In some embodiments, the battery pack includes a cell unit. The cell unit includes multiple cell groups. Each cell group includes at least one cell. The battery pack includes multiple heat exchangers. The cell groups are arranged alternately with the heat exchangers in a third direction. The third direction is perpendicular to a first direction.

In some embodiments, a distance between two adjacent heat exchangers gradually increases from a center of the cell unit to two ends of the cell unit in the third direction.

In some embodiments, the multiple heat exchangers include a first heat exchanger and a second heat exchanger. The first heat exchanger is provided with a first heat exchange inlet and a first heat exchange outlet. The second heat exchanger is provided with a second heat exchange inlet and a second heat exchange outlet. The cell group has the first direction and the third direction perpendicular to each other. The first heat exchanger and the second heat exchanger are arranged in the third direction. The first heat exchange inlet and the second heat exchange outlet are located at one end of the heat exchanger in the first direction, and the first heat exchange outlet and the second heat exchange inlet are located at the other end of the heat exchanger in the first direction. The first heat exchanger is arranged on one side of the cell group in the third direction, and the second heat exchanger is arranged on the other side of the cell group in the third direction.

In some embodiments, a flow direction of heat exchange fluid in the first heat exchanger is opposite to that of heat exchange fluid in the second heat exchanger.

In some embodiments, the multiple heat exchangers include multiple first heat exchangers and multiple second heat exchangers. The battery pack further includes a first connecting pipe, where the first connecting pipe is connected between the first heat exchange inlets of two adjacent first heat exchangers; a second connecting pipe, where the second connecting pipe is connected between the first heat exchange outlets of the two adjacent first heat exchangers;
a third connecting pipe, where the third connecting pipe is connected between the second heat exchange inlets of two adjacent second heat exchangers; and a fourth connecting pipe, where the fourth connecting pipe is connected between the second heat exchange outlets of the two adjacent second heat exchangers.

In some embodiments, the battery pack further includes: a first heat exchanger inlet pipe, where the first heat exchanger inlet pipe is connected to the first heat exchange inlet of the first heat exchanger located on the outermost side in the third direction; a first heat exchanger outlet pipe, where the first heat exchanger outlet pipe is connected to the first heat exchange outlet of the first heat exchanger located on the outermost side in the third direction, and the first heat exchanger outlet pipe and the first heat exchanger inlet pipe are located on the same side in the third direction; a second heat exchanger inlet pipe, where the second heat exchanger inlet pipe is connected to the second heat exchange inlet of the second heat exchanger located on the outermost side in the third direction; and a second heat exchanger outlet pipe, where the second heat exchanger outlet pipe is connected to the second heat exchange outlet of the second heat exchanger located on the outermost side in the third direction, and the second heat exchanger outlet pipe and the second heat exchanger inlet pipe are located on the other side in the third direction.

In some embodiments, the first heat exchanger is defined with a thickness L1, the second heat exchanger is defined with a thickness L2, and L1 and L2 satisfy: 2 mm≤L1≤5 mm, and 2 mm≤L2≤5 mm.

In some embodiments, the multiple heat exchangers are arranged in the third direction. Each heat exchanger is provided with an inlet and an outlet in two ends in the first direction. The inlets of the multiple heat exchangers are located at the same end of the first direction and are communicated with one another, and the outlets of the multiple heat exchangers are located at the other end of the first direction and are communicated with one another.

In some embodiments, the battery pack further includes multiple connecting pipes. A connecting pipe of the multiple connecting pipes located at the inlet is a fluid input pipe. A connecting pipe of the multiple connecting pipes located at the outlet is a fluid output pipe. The heat exchangers are communicated with both the fluid input pipe and the fluid output pipe.

In some embodiments, the battery pack further includes: a heat conducting piece. The heat conducting piece is arranged between the heat exchanger and the cell group.

A vehicle according to an embodiment in a third aspect of the present disclosure includes the battery pack according to the embodiments in the second aspect.

Additional aspects and advantages of the present disclosure will be partially provided in the following descriptions, and some of which will become apparent from the following descriptions or may be learned from practices of the present disclosure.

### BRIEF DESCRIPTION OF THE DRAWINGS

The foregoing and/or additional aspects and advantages of the present disclosure will become apparent and readily comprehensible from the following descriptions of the embodiments with reference to the accompanying drawings, where:
FIG. 1 is a schematic diagram of a battery pack according to some embodiments of the present disclosure;
FIG. 2 is a schematic diagram of a heat exchanger and a cell unit according to some embodiments of the present disclosure;
FIG. 3 is a partial three-dimensional split diagram of a heat exchanger and a cell unit according to some embodiments of the present disclosure;
FIG. 4 is a schematic diagram of part cells and part heat exchangers according to some embodiments of the present disclosure;
FIG. 5 is a schematic diagram of flowing of heat exchange fluid in a heat exchanger according to some embodiments of the present disclosure;
FIG. 6 is a schematic diagram of distribution of heat exchange flow channels inside a heat exchanger according to some embodiments of the present disclosure;
FIG. 7 is a cross-sectional schematic diagram of a heat exchanger according to some embodiments of the present disclosure;
FIG. 8 is a cross-sectional schematic diagram of a heat exchanger and a cell according to some embodiments of the present disclosure;
FIG. 9 is a schematic diagram of a battery pack according to some other embodiments of the present disclosure;
FIG. 10 is a schematic diagram of a heat exchanger and a cell unit according to some other embodiments of the present disclosure;
FIG. 11 is a schematic diagram of a heat exchanger and a cell unit according to still some embodiments of the present disclosure;
FIG. 12 is a schematic diagram of a battery pack according to still some embodiments of the present disclosure;
FIG. 13 is a partial schematic diagram of a battery pack according to still some embodiments of the present disclosure;
FIG. 14 is a left view of a structure shown in FIG. 13;
FIG. 15 is a schematic diagram of part heat exchangers and cells according to some embodiments of the present disclosure;
FIG. 16 is a cross-sectional schematic diagram of part heat exchangers and cells according to some embodiments of the present disclosure;
FIG. 17 is a cross-sectional schematic diagram of a first heat exchanger or a second heat exchanger according to some embodiments of the present disclosure;
FIG. 18 is a schematic diagram of distribution of first heat exchange flow channels and second heat exchange flow channels in a first heat exchanger according to some embodiments of the present disclosure;
FIG. 19 is a schematic diagram of distribution of first heat exchange flow channels and second heat exchange flow channels in a second heat exchanger according to some embodiments of the present disclosure; and
FIG. 20 is a schematic block diagram of a vehicle according to an embodiment of the present disclosure.

In the drawings:
battery pack 1000; cell 10; heat exchanger 20; first heat exchange section 21a; second heat exchange section 21b; first heat exchange flow channel 211;
second heat exchange flow channel 212; inlet 233; outlet 234; first confluence area 235; second confluence area 236; third confluence area 237;
fourth confluence area 238; heat conducting piece 5; connecting inlet pipe 36; connecting outlet pipe 37; connecting pipe 35; cover plate 200; tray 300;
accommodation cavity 301; first direction A; second direction B; third direction C; box body 1; cell unit 3; cell group 31; fluid input pipe 33; fluid output pipe 34; heat conducting piece 5; first heat exchanger 21; first heat exchange flow channel 211; first heat exchange inlet 216; first heat exchange outlet 213; first heat exchanger inlet pipe 214; first heat exchanger outlet pipe 215; second heat exchanger 22; second heat exchange flow channel 212; second heat exchange inlet 222; second heat exchange outlet 223; second heat exchanger inlet pipe 224; second heat exchanger outlet pipe 225; first connecting pipe 23; second connecting pipe 24; third connecting pipe 25; fourth connecting pipe 26; first heat conducting piece 51; second heat conducting piece 52; and vehicle 2000.

### DETAILED DESCRIPTION

Embodiments of the present disclosure are described in detail below, and the embodiments described with reference to accompanying drawings are exemplary.

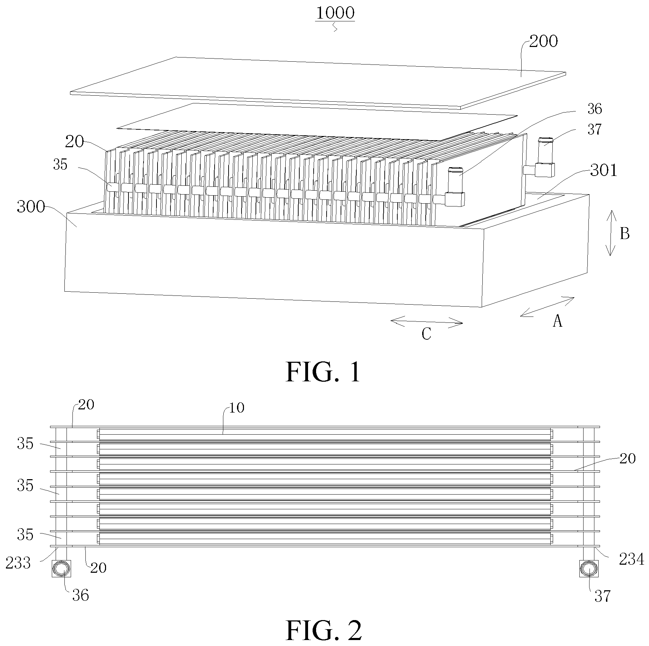

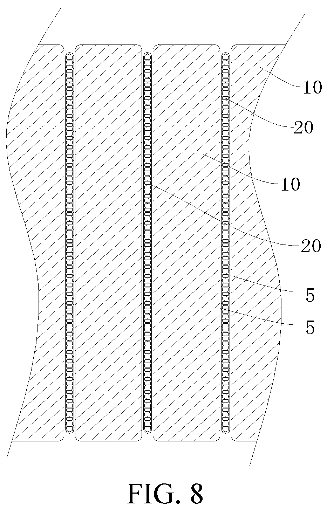

A heat exchanger 20 according to an embodiment of the present disclose will be described below with reference to FIG. 1 to FIG. 20. The heat exchanger 20 includes a first heat exchange section 21a and two second heat exchange sections 21b. In some embodiments, a first direction A is a length direction of the heat exchanger 20, a second direction B is a width direction of the heat exchanger 20, a third direction C is a thickness direction of the heat exchanger 20, and the first direction A, the second direction B, and the third direction C are orthogonal to each other. A size of the heat exchanger 20 in the length direction is greater than or equal to that in the width direction. A size of the heat exchanger 20 in the width direction is greater than or equal to that in the thickness direction.

Specifically, as shown in FIG. 2, FIG. 6, FIG. 18, and FIG. 19, the two second heat exchange sections 21b of the heat exchanger 20 are respectively connected to two ends of the first heat exchange section 21a in the first direction A of the heat exchanger 20. The first heat exchange section 21a is provided with at least one first heat exchange flow channel 211. The second heat exchange section 21b is provided with at least one second heat exchange flow channel 212. A volume proportion of the at least one second heat exchange flow channel 212 in the at least one second heat exchange section 21b is greater than that of the at least one first heat exchange flow channel 211 in the first heat exchange section 21a. That is, a ratio of a total volume of all second heat exchange flow channels 212 in the at least one second heat exchange section 21b to a volume of the second heat exchange section 21b is greater than that of a total volume of all first heat exchange flow channels 211 in the first heat exchange section 21a to a volume of the first heat exchange section 21a.

The heat exchanger 20 is internally provided with the second heat exchange flow channel 212 and the first heat exchange flow channel 211. For example, there may be one second heat exchange flow channel 212 and one first heat exchange flow channel 211. The first heat exchange flow channel 211 is opposite to the second heat exchange flow channel 212 in the first direction A. For example, in a case that the volume of the second heat exchange section 21b is the same as that of the first heat exchange section 21a, the volume of the second heat exchange flow channel 212 may be increased to enable the volume of the second heat exchange flow channel 212 to be greater than that of the first heat exchange flow channel 211, so that the volume proportion of the second heat exchange flow channel 212 in the second heat exchange section 21b is greater than that of the first heat exchange flow channel 211 in the first heat exchange section 21a, and the heat exchange capability of the second heat exchange section 21b is higher than that of the first heat exchange section 21a.

It is to be noted that, the volume proportion of the at least one second heat exchange flow channel 212 in the second heat exchange section 21b refers to a ratio of a sum of volumes of all second heat exchange flow channels 212 in the second heat exchange section 21b to the volume of the second heat exchange section 21b. The volume proportion of the at least one first heat exchange flow channel 211 in the first heat exchange section 21a refers to a ratio of a sum of volumes of all first heat exchange flow channels 211 in the first heat exchange section 21a to the volume of the first heat exchange section 21a. The volume of the heat exchange flow channel (that is, the foregoing first heat exchange flow channel 211 and second heat exchange flow channel 212) refers to capacity of the heat exchange flow channel, that is, a flow rate of a coolant or cooling gas that can be accommodated in the heat exchange flow channels. A relatively large volume proportion of the second heat exchange flow channel 212 in the second heat exchange section 21b indicates that space occupied by the second heat exchange flow channel 212 on the second heat exchange section 21b is relatively large, which can improve the heat exchange capability of the second heat exchange section 21b. Terminals of the cell 10 are usually arranged at one end or two ends of the cell 10, and the heat generated near the terminals of the cell 10 is often greater than the heat generated at other positions of the cell 10. High heat exchange capability of the second heat exchange section 21b can reduce the temperature near the terminals of the cell 10 purposefully. For example, when a positive terminal and a negative terminal of the cell 10 are arranged at the same end of the cell 10, the volume proportion of the second heat exchange flow channel 212 in the second heat exchange section 21b may be greater than that of the first heat exchange flow channel 211 in the first heat exchange section 21a, and the second heat exchange section 21b is arranged adjacent to one end of the cell 10 where the terminals are located. Thus, heat dissipation can be performed for heat generating situations at different positions of the cell 10 to improve heat dissipation efficiency. Alternatively, when a positive terminal and a negative terminal of the cell 10 are respectively arranged at the two ends of the cell 10, the volume proportions of the second heat exchange flow channels 212 in the two second heat exchange sections 21b may both be greater than that of the first heat exchange flow channel 211 in the first heat exchange section 21a, and the two second heat exchange sections 21b are respectively arranged adjacent to the two ends of the cell 10 where the terminals are located. Thus, heat dissipation can be performed for heat generating situations at different positions of the cell 10 to improve heat dissipation efficiency.

In the heat exchanger 20 according to the embodiments of the present disclosure, the volume proportion of all second heat exchange flow channels 212 in the at least one second heat exchange section 21b is greater than that of all first heat exchange flow channels 211 in the first heat exchange section 21a, the ratio of the volume of all second heat exchange flow channels 212 to that of the second heat exchange section 21b is large, a total volume of the second heat exchange flow channels 212 is large, and a total flow rate flowing through the second heat exchange flow channels 212 is increased, so that the heat exchange capability of the second heat exchange section 21b is higher than that of the first heat exchange section 21a, thereby increasing heat exchange of the second heat exchange section 21b. Thus, when the heat exchanger 20 is arranged adjacent to at least one surface of the cell 10, the terminals of the cell are usually arranged at one end or two ends of the cell 10, and the heat generated at the positions of the terminals of the cell is greater than that generated at other positions of the cell 10. The second heat exchange section 21b at an end portion of the heat exchanger 20 may be arranged adjacent to the terminal of the cell 10 to improve the heat dissipation efficiency near the terminal of the cell purposefully.

In at least one of the two second heat exchange sections 21b, a ratio of the volume of all second heat exchange flow channels 212 to the volume of the corresponding second heat exchange section 21b is greater than that of the volume of the all first heat exchange flow channels 211 to the volume of the first heat exchange section 21a. For example, when one second heat exchange section 21b of the heat exchanger 20 needs to have a high heat exchange capability, the volume proportion of all second heat exchange flow channels 212 in the one second heat exchange section 21b is greater than that of all first heat exchange flow channels 211 in the first heat exchange section 21a. At this moment, the ratio of the volume of all second heat exchange flow channels 212 in the other second heat exchange section 21b to the volume of the other second heat exchange section 21b is not limited, and may be designed according to requirements. For example, in the other second heat exchange section 21b, the ratio of the volume of the second heat exchange flow channel 212 to the volume of the other second heat exchange section 21b may be equal to that of the volume of all first heat exchange flow channels 211 to the volume of the first heat exchange section 21a.

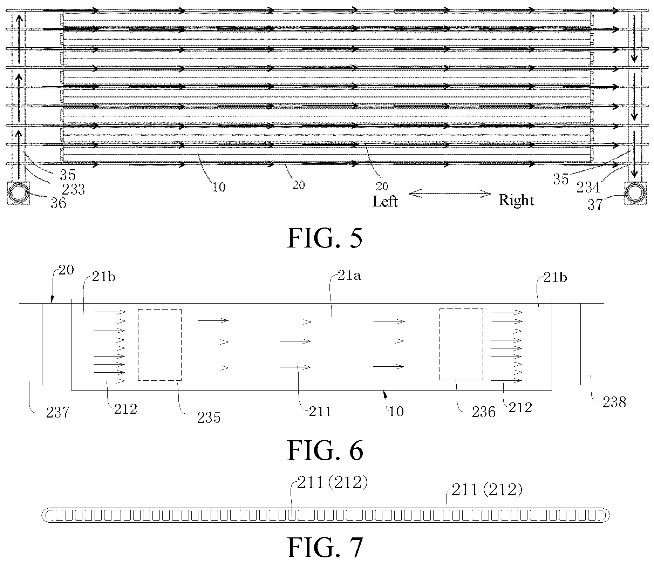

Further, as shown in FIG. 6, the volume proportion of all second heat exchange flow channels 212 in each second heat exchange section 21b is greater than that of all first heat exchange flow channels 211 in the first heat exchange section 21a. At this moment, the volume proportions of all second heat exchange flow channels 212 in the two second heat exchange sections 21b are both greater than that of all first heat exchange flow channels 211 in the first heat exchange section 21a, and the heat exchange capabilities of the two second heat exchange sections 21b are both higher than that of the first heat exchange section 21a. Thus, the volume proportion of all second heat exchange flow channels 212 in each second heat exchange section 21b is greater than that of all first heat exchange flow channels 211 in the first heat exchange section 21a, and heat exchange effects at two ends of the heat exchanger 20 are good. For the cell 10 with the positive terminal and the negative terminal arranged at the two ends, when the heat exchanger 20 is arranged adjacent to at least one surface of the cell 10, the two second heat exchange sections 21b arranged at the end portions of the heat exchanger 20 may be respectively arranged adjacent to the two terminals at the two ends of the cell 10, thereby improving the heat dissipation efficiency near the terminals at the two ends of the cell 10 purposefully. In other words, when the positive terminal and the negative terminal of the cell 10 are respectively arranged at the two ends of the cell 10, the two second heat exchange sections 21b are respectively arranged adjacent to the two ends of the cell 10 where the two terminals are located, and heat dissipation can be performed for heat generating situations at different positions of the cell 10 to improve the heat dissipation efficiency.

For example, when the volume of the first heat exchange section 21a is the same as that of the second heat exchange section 21b, a sum of volumes of all first heat exchange flow channels 211 is less than that of the volumes of all second heat exchange flow channels 212, a total flow rate of heat exchange fluid flowing through all first heat exchange flow channels 211 is relatively low, and the total flow rate of heat exchange fluid flowing through all second heat exchange flow channels 212 is relatively high, so that the overall heat exchange effect of all first heat exchange flow channels 211 is lower than that of all second heat exchange flow channels 212, and the heat exchange capability of the first heat exchange section 21a is lower than that of the second heat exchange section 21b. Thus, the total flow of the heat exchange fluid in all second heat exchange flow channels 212 of the second heat exchange section 21b is greater than that of the heat exchange fluid in all first heat exchange flow channels 211, so that the second heat exchange section 21b has a good heat exchange capability near the terminals of the cell 10.

To facilitate smooth flowing of the heat exchange fluid in the second heat exchange flow channel 212 to the first heat exchange flow channel 211 and to the second heat exchange flow channel 212 at the other end, a first confluence area 235 and a second confluence area 236 may be provided between the first heat exchange flow channel 211 and the second heat exchange flow channel 212, and the first confluence area 235 and the second confluence area 236 are communicated with both the first heat exchange flow channel 211 and the second heat exchange flow channel 212. In the first direction A of the heat exchanger 20, the first confluence area 235 and the second confluence area 236 may be defined by the first heat exchange section 21a and the second heat exchange section 21b of the heat exchanger 20 respectively. Structures corresponding to the first confluence area 235 and the second confluence area 236 in the heat exchanger 20 may be cavities with two open ends in the first direction A of the heat exchanger 20. The first confluence area 235 and the second confluence area 236 are both communicated with the second heat exchange flow channel 212 and the first heat exchange flow channel 211. The heat exchange fluid in the multiple second heat exchange flow channels 212 will converge in the first convergence area 235 and flow to the first heat exchange flow channel 211. The heat exchange fluid flowing out of the first heat exchange flow channel 211 will converge in the second convergence area 236 and flow out of the heat exchanger 20 from the second heat exchange flow channel 212 at the other end.

In some embodiments, as shown in FIG. 6, FIG. 18, and FIG. 19, multiple first heat exchange flow channels 211 are provided, and multiple second heat exchange flow channels 212 are provided. In the descriptions of the present disclosure, "multiple" means two or more. A quantity of the first heat exchange flow channels 211 is less than that of the second heat exchange flow channels 212 at at least one end portion of the heat exchanger 20. That is, in the first direction A of the heat exchanger 20, the quantity of the first heat exchange flow channels 211 in the first heat exchange section 21a is less than that of the second heat exchange flow channels 212 in the second heat exchange section 21b at one end, or the quantity of the first heat exchange flow channels 211 is less than those of the second heat exchange flow channels 212 in the two second heat exchange sections 21b. For example, when a hole diameter of the first heat exchange flow channel 211 is the same as that of the second heat exchange flow channel 212, the quantity of the first heat exchange flow channels 211 is less than that of the second heat exchange flow channels 212 in the at least one second heat exchange section 21b, the total flow rate of the heat exchange fluid flowing in the first heat exchange flow channel 211 is relatively low, the heat exchange efficiency of the first heat exchange section 21a is relatively low, and the second heat exchange flow channel 212 in the foregoing at least one second heat exchange section 21b has relatively high heat dissipation efficiency, so that the heat exchange efficiency at the end portion of the heat exchanger 20 is relatively high. Thus, multiple first heat exchange flow channels 211 and multiple second heat exchange flow channels 212 are provided, and the quantity of the first heat exchange flow channels 211 is less than that of the second heat exchange flow channels 212 at at least one end of the heat exchanger 20. Thus, the flow rate of the heat exchange fluid flowing through the second heat exchange section 21b at the at least one end may be increased, so that when terminals at end portions of the cell 10 are arranged adjacent to the second heat exchange section 21b, the heat exchanger 20 can better take away the heat at positions near the terminals to achieve a good heat dissipation effect. In a case that the heat exchanger 20 is applied to a battery pack, positions near the terminals at the two ends of the cell 10 in the first direction are main heat generating areas, and the heat generated in the middle of the cell 10 is relatively low. Thus, the heat dissipation efficiency of the two ends of the cell 10 in the first direction can be improved and temperature of the cell 10 can be rapidly adjusted by increasing the quantity of the heat exchange flow channels located at the two ends of the heat exchanger 20 in the first direction. For the middle of the heat exchanger 20 with a small quantity of heat exchange flow channels, structural strength of the heat exchanger 20 can be improved while ensuring the heat dissipation efficiency of the middle of the heat exchanger 20.

In some embodiments, in combination with FIG. 6, FIG. 18, and FIG. 19, when multiple first heat exchange flow channels 211 and multiple second heat exchange flow channels 212 are provided, the multiple first heat exchange flow channels 211 are arranged in the second direction B, the second heat exchange flow channels 212 are arranged in the second direction B, and the second direction B is perpendicular to the first direction A. Thus, the multiple first heat exchange flow channels 211 and the multiple second heat exchange flow channels 212 are arranged in the second direction B, that is, the width direction of the heat exchanger 20, so as to improve a heat exchange effect of the heat exchanger 20 in the second direction B and increase heat exchange area of the heat exchanger 20. For example, when the heat exchanger 20 is configured to perform heat dissipation on a cell group including at least one cell 10, the cell group and the heat exchanger 20 are arranged in the third direction C, the heat exchange flow channels provided in the second direction B may increase contact area with the cell 10, and more heat can be taken away. Thus, the multiple first heat exchange flow channels 211 and the multiple second heat exchange flow channels 212 are arranged in the second direction B, which can increase the heat exchange area of the heat exchanger 20, optimize distribution of the flow channels in the heat exchanger 20 in the second direction B, and improve heat dissipation uniformity and heat exchange efficiency.

In some embodiments, structural strength of the first heat exchange section 21a is higher than that of the second heat exchange section 21b. For example, when a hole diameter of the first heat exchange flow channel 211 is the same as that of the second heat exchange flow channel 212, relatively few first heat exchange flow channels 211 are provided in the first heat exchange section 21a, so that a ratio of a sum of volumes of the multiple first heat exchange flow channels 211 to the volume of the first heat exchange section 21a is relatively small, which can relatively improve the structural strength of the first heat exchange section 21a. Thus, the structural strength of the first heat exchange section 21a is higher than that of the second heat exchange section 21b, so that the first heat exchange section 21a has good deformation resistance. When the heat exchanger 20 is arranged adjacent to at least one surface of the cell 10, especially when the heat exchanger 20 is arranged adjacent to a large surface (that is, a surface with maximum area of all surfaces of the cell) of the cell 10, a central position of the large surface of the cell is a surface with the highest expansion probability and/or the highest expansion degree during use of the cell 10, so that the structural strength of the first heat exchange section 21a in the middle of the heat exchanger 20 is higher than that of the second heat exchange section 21b at the end portion, expansion of the cell 10 can be suppressed, and stability of the cell 10 and the heat exchanger 20 can be improved.

Optionally, a portion of the first heat exchange section 21a corresponding to the at least one second heat exchange flow channel 212 is of a solid structure. For example, a quantity of the first heat exchange flow channels 211 included in the first heat exchange section 21a is less than that of the second heat exchange flow channels 212. In the first direction A, the first heat exchange flow channels 211 are in one-to-one correspondence with at least part of the second heat exchange flow channels 212, and the other part of the second heat exchange flow channels 212 may be opposite to a connection between two adjacent first heat exchange flow channels 211 to reduce density of the first heat exchange flow channels 211. When a portion of the first heat exchange section 21a is of a solid structure, the structural strength of the first heat exchange section 21a can be improved, and the deformation resistance of the first heat exchange section 21a can be improved; alternatively, when a portion of the first heat exchange section 21a is of a closed hollow structure, weight of the heat exchanger 20 can be reduced, and lightweight of the heat exchanger 20 can be achieved. Thus, the portion of the first heat exchange section 21a is of the solid structure, and the structural strength of the first heat exchange section 21a can be improved, so that the heat exchanger 20 can better suppress, for example, the expansion of the cell 10 and improve the structural strength of the heat exchanger 20.

In some embodiments, a wall thickness of the at least one first heat exchange flow channel 211 is greater than that of the at least one second heat exchange flow channel 212. For example, the quantity of the first heat exchange flow channel 211 is relatively small, correspondingly, a distance between two adjacent first heat exchange flow channels 211 increases or a distance between the first heat exchange flow channel 211 and a surface of the heat exchanger 20 in the first direction A increases. The wall thickness of the first heat exchange flow channel 211 in the first direction A increases, which may be understood as that a distance between central axes of two adjacent first heat exchange flow channels 211 increases in a case that the hole diameter of the first heat exchange flow channel 211 is unchanged. Thus, the wall thickness of the at least one first heat exchange flow channel 211 is greater than that of the at least one second heat exchange flow channel 212, which can improve the structural strength of the first heat exchange section 21a.

According to some embodiments of the present disclosure, the heat exchanger 20 is defined with a thickness D in the third direction, where D satisfies: 2 mm≤D≤5 mm. When D is less than 2 mm, the thickness of the heat exchanger 20 is relatively small, so that the structural strength of the heat exchanger 20 is relatively low, and the heat exchanger 20 is prone to deformation during mounting and use to affect the heat dissipation efficiency of the battery pack to which the heat exchanger 20 is applied. When D is greater than 5 mm, the thickness of the heat exchanger 20 is relatively large, so that a volume of the battery pack will be increased, and a volume utilization rate of the battery pack will be reduced. Thus, when the thickness D of the heat exchanger 20 ranges from 2 mm to 5 mm, the structural strength of the heat exchanger 20 can be ensured, deformation of the heat exchanger 20 can be avoided, meanwhile, the heat dissipation efficiency of the battery pack can be ensured, and the volume utilization rate of the battery pack can be ensured.

In some embodiments, as shown in FIG. 6 and FIG. 18 to FIG. 19, each second heat exchange flow channel 212 and each first heat exchange flow channel 211 extend along a straight line of the first direction A. Thus, the first heat exchange flow channel 211 and the second heat exchange flow channel 212 extend in the first direction A, and flow velocity of the heat exchange fluid used for exchanging heat inside the flow channels can be increased, so that the heat exchange fluid can reduce the heat on the second heat exchange section 21b more quickly to improve use safety of the heat exchanger 20.

In some embodiments, in combination with FIG. 6, FIG. 18, and FIG. 19, the heat exchanger 20 is formed by splicing the first heat exchange section 21a with the corresponding second heat exchange sections 21b. For example, the first heat exchange section 21a and the second heat exchange section 21b may be respectively manufactured, and connecting surfaces of the second heat exchange section 21b and the first heat exchange section 21a may be welded together through a welding process, so that the first heat exchange flow channel 211 is communicated with the second heat exchange flow channel 212. In some embodiments, as shown in FIG. 6, a third confluence area 237 and a fourth confluence area 238 are respectively provided at ends of the two second heat exchange sections 21b away from the first heat exchange section 21a. The third confluence area 237 and the fourth confluence area 238 may be respectively defined by the ends of the two second heat exchange sections 21b away from each other. The third confluence area 237 and the fourth confluence area 238 are cavities with two open ends in the first direction A. One end of the third confluence area 237 and one end of the fourth confluence area 238 away from the second heat exchange sections 21b are communicated with an exterior. The third confluence area 237 and the fourth confluence area 238 are welded with the ends of the two second heat exchange sections 21b away from each other. The third confluence area 237 and the fourth confluence area 238 can reduce the flow velocity of the heat exchange fluid, meanwhile, can ensure sufficient flow rate of the heat exchange fluid entering the multiple second heat exchange flow channels 212, and improve the heat exchange efficiency. The heat exchange fluid flowing out of the second heat exchange flow channels 212 may converge first and then flow out, so that time of the heat exchange fluid in the heat exchange flow channels can be prolonged, and outflow velocity of the heat exchange fluid can be reduced. The heat exchange fluid entering the heat exchanger 20 may flow through the third confluence area 237, one second heat exchange flow channel 212, the first confluence area 235, the first heat exchange flow channel 211, the second confluence area 236, and the other second heat exchange flow channel 212 in sequence, and flows out from the fourth confluence area 238.

Thus, the first heat exchange section 21a and the corresponding second heat exchange sections 21b are spliced to form the heat exchanger 20, which can reduce difficulties in a manufacturing process of the heat exchanger 20 and improve assembly efficiency of the heat exchanger 20.

Optionally, the first heat exchange section 21a and the second heat exchange section 21b are respectively extrusion molding pieces. Thus, the first heat exchange section 21a and the second heat exchange section 21b are manufactured through an extrusion molding process, which can effectively reduce manufacturing costs of the heat exchanger 20, improve a utilization rate of materials for manufacturing the heat exchanger 20, and improve manufacturing efficiency and product yield.

Optionally, as shown in FIG. 7, the second heat exchange flow channel 212 or the first heat exchange flow channel 211 inside the heat exchanger 20 may be spaced away in the second direction B of the heat exchanger 20 and may extend in the first direction A of the heat exchanger 20, thereby increasing heat exchange area and improving a heat exchange capability of the heat exchanger 20.

A battery pack 1000 according to according to an embodiment of a second aspect of the present disclosure includes a cell unit 3 and at least one heat exchanger 20. The heat exchanger 20 is the heat exchanger 20 according to any embodiment of the foregoing aspect of the present disclosure.

In some embodiments, the cell unit 3 includes multiple cell groups 31. Each cell group 31 includes at least one cell 10. The heat exchanger 20 is configured to perform heat exchange on the cell 10. The battery pack 1000 includes multiple heat exchangers 20. The cell groups 31 are arranged alternately with the heat exchangers 20 in a third direction C of the heat exchanger 20. The third direction C is perpendicular to a first direction A. Here, each cell group 31 including one cell 10 is taken as an example here, that is, the heat exchangers 20 being arranged on two sides of each cell 10 in the third direction C is taken as an example.

In combination with FIG. 1 to FIG. 20, exemplarily, the heat exchangers 20 and the cells 10 are arranged alternately in sequence in the third direction C of the heat exchanger 20. A quantity of first heat exchange flow channels 211 included in each heat exchanger 20 is less than that of second heat exchange flow channels 212, and a volume proportion of the second heat exchange flow channels 212 in each second heat exchange section 21b is greater than that of the first heat exchange flow channels 211 in a first heat exchange section 21a. When a hole diameter of the first heat exchange flow channel 211 is the same as that of the second heat exchange flow channel 212, the quantity of the first heat exchange flow channels 211 is relatively small, so that structural strength of the corresponding first heat exchange section 21a is higher than that of the second heat exchange section 21b. A central position of a large surface of the cell is a surface with the highest expansion probability and/or the highest expansion degree during use of the cell 10, so that the heat exchanger 20 can effectively suppress deformation of the cell 10 and prolong service life of the cell 10 when the cell 10 is deformed by heat. Flow directions of the heat exchange fluid inside the multiple heat exchangers 20 are the same, which can improve heat dissipation efficiency of the multiple cells 10.

Optionally, a distance between two adjacent heat exchangers 20 gradually increases from a center of the cell unit 3 to two ends of the cell unit 3 in the third direction.

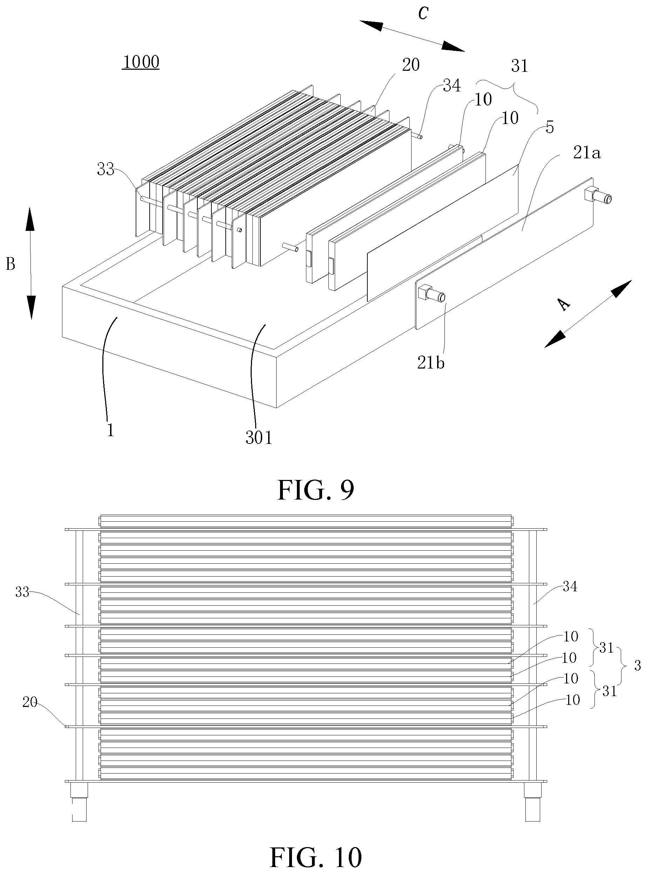

The distance between the two adjacent heat exchangers 20 gradually increasing from the center of the cell unit 3 to the two ends of the cell unit 3 in the third direction refers to that the distance between the two adjacent heat exchangers 20 is in an increasing trend from the center of the cell unit 3 to the two ends of the cell unit 3 in the third direction, for example, may increase regularly. For example, in an example in FIG. 10, the distance between the two adjacent heat exchangers 20 gradually increasing from the center of the cell unit 3 to the two ends of the cell unit 3 in the third direction may be that, from the center of the cell unit 3 to the two ends of the cell unit 3 in the third direction, a distance between a first cell group 31 and a second cell group 31 is less than that between the second cell group 31 and a third cell group 31, the distance between the second cell group 31 and the third cell group 31 is less than that between the third cell group 31 and a fourth cell group 31, and so on. Alternately, the distance between two adjacent heat exchangers 20 may increase irregularly from the center of the cell unit 3 to the two ends of the cell unit 3 in the third direction. For example, from the center of the cell unit 3 to the two ends of the cell unit 3 in the third direction, a distance between a first cell group 31 and a second cell group 31 is equal to that between the second cell group 31 and a third cell group 31, the distance between the second cell group 31 and the third cell group 31 is less than that between the third cell group 31 and a fourth cell group 31, the distance between the third cell group 31 and the fourth cell group 31 is less than that between the fourth cell group 31 and a fifth cell group 31, and so on.

The cell 10 located in a central area of the battery pack 1000 in the third direction has a poor heat dissipation capability. The heat exchangers 20 and the cell groups 31 are arranged alternately, and the density of the heat exchangers 20 located in the middle of the third direction of the battery pack 1000 is set to be relatively large, so that the heat dissipation efficiency of the battery pack 1000 can be improved, a quantity of the heat exchangers 20 can be reduced and costs of the battery pack 1000 can be reduced while quickly reducing temperature of the battery pack 1000.

When the temperature of the battery pack 1000 rises, a coolant may enter the heat exchanger 20 through a heat exchange fluid inlet and perform heat exchange with the cell 10 in the heat exchanger 20 to reduce the temperature of the cell 10, and the coolant after heat exchange flows out of the heat exchanger 20 through a heat exchange fluid outlet. Thus, heat dissipation of the cell 10 is achieved.

For example, in examples in FIG. 9 and FIG. 10, the battery pack 1000 further includes a box body 1. The cell unit 3 is arranged in the box body 1. A shape of the box body 1 is roughly rectangular. A manufacturing material of the box body 1 may be metal materials such as aluminum alloy or steel, or may be a high strength composite material, so that the cell unit 3 in the box body 1 can be protected well. Four side walls that are connected to each other of the box body 1 define an accommodation cavity 301 together, and the cell unit 3 is arranged in the accommodation cavity 301.

According to some embodiments of the present disclosure, the cell 10 has a length direction, a width direction, and a thickness direction orthogonal to each other. A size of the cell 10 in the length direction is greater than or equal to those of the cell 10 in the width direction and the thickness direction. A size of the cell 10 in the width direction is greater than or equal to that of the cell 10 in the thickness direction. The thickness direction of the cell 10 is a third direction, the length direction of the cell 10 is a first direction, and the width direction of the cell 10 is a second direction.

In an example shown in FIG. 1, the battery pack 1000 further includes a tray 300 and a cover plate 200. The cell 10 and the heat exchanger 20 are placed in the accommodation cavity 301 defined by the tray 300. The cover plate 200 encloses the accommodation cavity 301. Optionally, cold plates may be arranged on two sides of the second direction B of the heat exchanger 20 to increase heat dissipation of two side surfaces of the cell 10 in the second direction B.

The battery pack 1000 according to an embodiment of the present disclosure includes the heat exchanger 20 according to any one of the foregoing embodiments, which can improve a heat dissipation capability of the battery pack 1000 and improve use safety of the battery pack 1000. The battery pack 1000 may be applied to a vehicle. In the following descriptions of the present disclosure, the battery pack 100 being applied to the vehicle is taken as an example for description.

In some embodiments, as shown in FIG. 2 and FIG. 5, the heat exchangers 20 are arranged in the third direction C. Each heat exchanger 20 is provided with an inlet 233 and an outlet 234 in two ends in the first direction A. It may be understood that the inlet 233 is a heat exchange fluid inlet of the heat exchanger 20, and the outlet 234 is a heat exchange fluid outlet of the heat exchanger 20. For example, in combination with FIG. 2, FIG. 5, and FIG. 6, the inlet 233 may be provided on one of the third confluence area 237 and the fourth confluence area 238, and the outlet 234 may be provided on the other of the third confluence area 237 and the fourth confluence area 238. The inlets 233 of the multiple heat exchangers 20 are located at the same end of the heat exchangers 20 in the first direction A and are communicated with one another, and the outlets 234 of the multiple heat exchangers 20 are located at the other end of the heat exchangers 20 in the first direction A and are communicated with one another. In the first direction A, two adjacent inlets 233 and two adjacent outlets 234 are respectively communicated with each other through connecting pipes 35. For example, in combination with FIG. 2, FIG. 5, FIG. 6, and FIG. 9, the connecting pipe 35 at the inlet 233 may be referred to as a fluid input pipe 33, and the connecting pipe 35 at the outlet 234 may be referred to as a fluid output pipe 34. A quantity of the fluid input pipe 33 is greater than or equal to 1, and a quantity of the fluid output pipe 34 is greater than or equal to 1. The heat exchanger 20 is communicated with both the fluid input pipe 33 and the fluid output pipe 34. Specifically, the fluid input pipe 33 of the heat exchanger 20 is communicated with the heat exchange fluid inlet, and the fluid output pipe 34 of the heat exchanger 20 is communicated with the heat exchange fluid outlet. When the battery pack 1000 is charged, the cell 10 generates heat. A coolant flows into the heat exchange fluid inlet through the fluid input pipe 33 and enters the heat exchanger 20. The coolant flows through an end portion and a middle of a cooling flow channel, and performs heat exchange with the heat generated by the cell 10 in the heat exchange flow channel to reduce the temperature of the cell 10. Subsequently, the coolant after heat exchange flows out from the heat exchange fluid outlet, and flows out of the heat exchanger 20 through the fluid output pipe 34. Moreover, the heat exchanger 20 is connected to an adjacent heat exchanger 20 through the fluid input pipe 33 and the fluid output pipe 34, so that the coolant can enter the multiple heat exchangers 20 through the heat exchange fluid inlets, and finally flows into a coolant storage device through the fluid output pipe 34. Thus, a complete heat exchange cycle is completed to dissipate heat of the cell 10.

The cell 1000 includes a connecting inlet pipe 36 and a connecting outlet pipe 37. On the heat exchanger 20 on the outermost side, the connecting inlet pipe 36 is connected to the inlet 233 of the heat exchanger 20, and the connecting outlet pipe 37 is connected to the outlet 234 of the heat exchanger 20, so that the heat exchanger 20 can be communicated with an external system. For example, the fluid input pipe 33 and the fluid output pipe 34 on the heat exchanger 20 located on the outermost side may be communicated with the coolant storage device through the connecting inlet pipe 36 and the connecting outlet pipe 37 respectively. High-temperature heat exchange fluid flowing out from the connecting outlet pipe 37 may form low-temperature heat exchange fluid through the external system and flows into the heat exchanger 20 from the connecting inlet pipe 36 to perform heat dissipation on the cell 10. Flow directions of the heat exchange fluid inside the multiple heat exchangers 20 are the same, for example, flowing from a left side to a right side shown in FIG. 5 in the first direction A of the heat exchanger 20. The flow directions of the heat exchange fluid inside the multiple heat exchangers 20 are not limited here, and the heat exchange fluid may alternatively flow from right to left.

Thus, each heat exchanger 20 is provided with an inlet 233 and an outlet 234. The multiple inlets 233 are communicated with one another. The multiple outlets 234 are communicated with one another. The heat exchange fluid entering interiors of the heat exchangers 20 may enter from the inlets 233 of the multiple heat exchangers 20 and flow out from the outlets 234 of the multiple heat exchangers 20 to achieve synchronous heat dissipation of the multiple cells 10 and improve the heat dissipation efficiency of the cells 10.

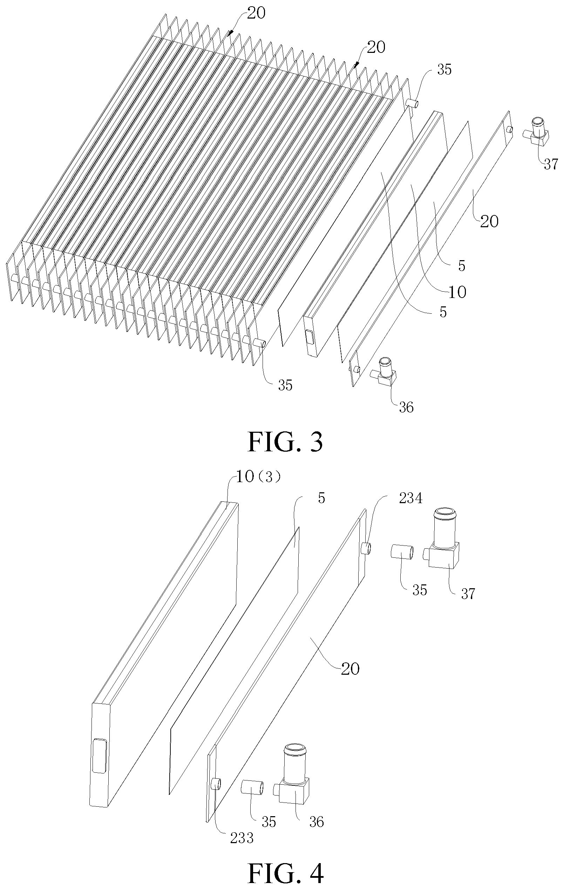

In some embodiments, as shown in FIG. 3, FIG. 9, and FIG. 12, the battery pack 1000 further includes: a heat conducting piece 5. The heat conducting piece 5 is arranged between the heat exchanger 20 and the cell group 31. In the third direction C of the heat exchanger 20, heat exchangers 20 are arranged on two sides of the cell 10, and the heat conducting piece 5 may be arranged between the heat exchanger 20 and the cell 10 to facilitate transferring the heat generated by the cell 10 to the heat exchanger 20. The heat conducting piece 5 may be coated or filled between the heat exchanger 20 and the cell 10. Further, the heat conducting piece 5 is a heat conductive structure adhesive, heat conductive silicone, or heat conductive silicone grease, but is not limited to this, as long as a material for manufacturing the heat conducting piece 5 is a high temperature resistant insulation material. The heat conducting piece 5 may have binding property to facilitate mounting between the cell 10 and the heat exchanger 20 while dissipating the heat of the cell 10 that is in contact with the heat conducting piece 5. The heat conducting piece 5 further has insulating property and high temperature resistance, and the heat conducting piece 5 has good heat conducting property, which can improve the heat dissipation capability of the cell 10 and improve structural strength and stability of the battery pack 1000. Thus, the heat conducting piece 5 is arranged between the heat exchanger 20 and the cell group 31, which may increase heat conductivity between the cell 10 and the heat exchanger 20, so that the heat on the cell 10 can be transferred to the heat exchanger 20 as much as possible to improve the heat exchange capability of the heat exchanger 20 through the heat conducting piece 5. Therefore, the heat dissipation efficiency of the cell 10 can be improved, good performance of the cell 10 can be maintained, and the heat dissipation efficiency of the battery pack 1000 can be further improved.

According to some embodiments of the present disclosure, a surface of the heat exchanger 20 is provided with an insulation layer. The insulation layer may form an insulation film in insulation treatment manners such as spraying, electrophoresis, or coating an insulation film. An arrangement of the insulation layer can prevent a current from being transferred to the heat exchanger 20 when the cell 10 leaks electricity. Optionally, the heat exchanger 20 may be a harmonica-shaped pipe, a stamping and brazing cold plate, or cold plates in other forms. The heat exchanger 20 may be an aluminum alloy piece.

Optionally, the cell 10 may be a rechargeable secondary cell, for example, a lithium iron phosphate cell or a ternary material cell. Terminals of the cell 10 may be led out from a first direction of the cell 10, or led out from a second direction of the cell 10. That is, the terminals may be arranged on the same side or different sides of the cell 10.

According to some embodiments of the present disclosure, the battery pack 1000 further includes fireproof pieces. The fireproof pieces are arranged on at least parts of two opposite side surfaces of the cell group 31 in the first direction and two opposite side surfaces in the second direction. For example, the fireproof piece may be arranged on a surface of the cell group 31 that is not in contact with the heat conducting piece 5 and the heat exchanger 20. The use of the fireproof piece can prevent danger such as catching fire of the battery pack 1000 due to over-high temperature and ensures use safety of the battery pack 1000.

According to some embodiments of the present disclosure, the first direction A is a length direction of the cell 10, the second direction B is a width direction of the cell 10, the third direction A is a thickness direction of the cell 10, and the third direction C, the second direction B, and the first direction A are orthogonal to each other. A size of the cell 10 in the length direction is defined as L, a size of the cell 10 in the width direction is defined as W, a size of the cell 10 in the thickness direction is defined as D, and L, W, and D satisfy: L≥W≥D.

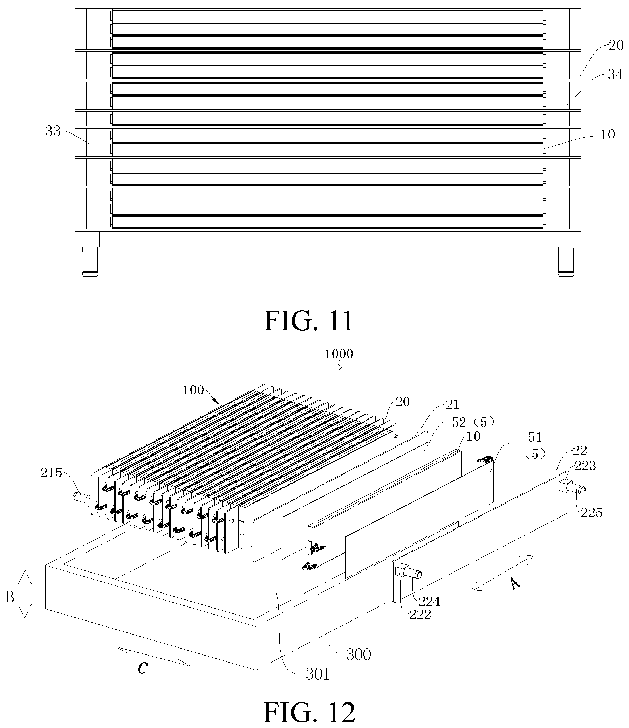

For example, as shown in FIG. 12 to FIG. 14, the multiple cell groups 31 are arranged in the third direction C. The multiple heat exchangers 20 include a first heat exchanger 21 and a second heat exchanger 22. The first heat exchanger 21 is provided with a first heat exchange inlet 216 and a first heat exchange outlet 213. The second heat exchanger 22 is provided with a second heat exchange inlet 222 and a second heat exchange outlet 223. The cell group 31 has a third direction C and a first direction A perpendicular to each other. The first heat exchanger 21 and the second heat exchanger 22 are arranged in the third direction C. The first heat exchange inlet 216 and the second heat exchange outlet 223 are located at one end of the heat exchanger 20 in the first direction A, and the first heat exchange outlet 213 and the second heat exchange inlet 222 are located at the other end of the heat exchanger 20 in the first direction A. The first heat exchanger 21 is arranged on one side of each cell group 31 in the third direction C, and the second heat exchanger 22 is arranged on the other side in the third direction C. Here, each cell group 31 including one cell 10 is taken as an example.

In combination with FIG. 12 to FIG. 15, adjacent first heat exchanger 21 and second heat exchanger 22 are spaced away from each other. The first heat exchanger 21 and the second heat exchanger 22 may operate independently. The first heat exchanger 21 and the second heat exchanger 22 are respectively arranged on two sides of the cell 10 in the third direction C. The first heat exchange inlet 216 and the second heat exchange inlet 222 are respectively located at the two ends of the heat exchanger 20 in the third direction C, so heat exchange fluid may enter the first heat exchanger 21 and the second heat exchanger 22 from different directions.

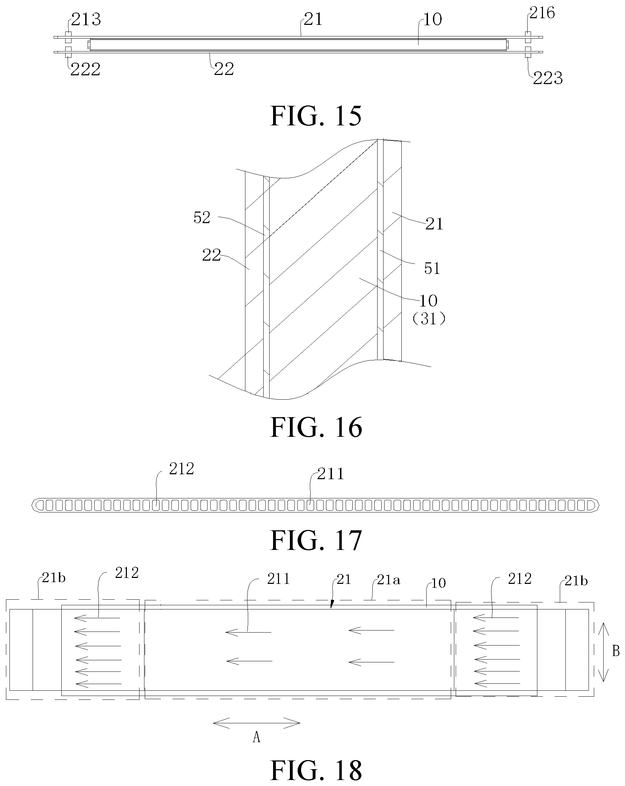

Further, in combination with FIG. 15, FIG. 18, and FIG. 19, for example, the heat exchange fluid enters a heat exchange flow channel from the second heat exchange inlet 222. A portion of the cell 10 adjacent to the second heat exchange inlet 222 dissipates heat quickly, and a portion away from the second heat exchange inlet 222 dissipates heat slowly. Since the heat exchange fluid takes away heat of the portion of the cell 10 adjacent to the second heat exchange inlet 222 to cause a temperature rise of the heat exchange fluid, temperature difference between the heat exchange fluid and the portion of the cell 10 away from the second heat exchange inlet 222 is reduced, and the heat of the portion of the cell 10 adjacent to the second heat exchange inlet 222 taken away by the heat exchange fluid is limited, so that a heat dissipation effect of the portion of the cell 10 adjacent to the second heat exchange inlet 222 is poor. Therefore, different positions of the cell 10 have different heat dissipation effects. The heat exchange fluid flowing into the heat exchanger 20 from the first heat exchange inlet 212 located on the other side may take away the heat dissipated by the portion of the foregoing cell 10 with a poor heat dissipation effect, so that heat dissipation capabilities of the two ends of the cell 10 in the first direction A are the same, and an impact of the heat absorbed by the heat exchange fluid during flowing on the heat dissipation effect is reduced.

Thus, through an arrangement, the first heat exchanger 21 and the second heat exchanger 22 are respectively arranged on two opposite sides of the cell 10 in the third direction, and inlets of the first heat exchanger 21 and the second heat exchanger 22 are respectively located at two ends in the first direction A, so as to facilitate entering of the heat exchange fluid from the two ends in the first direction A to the first heat exchanger 21 and the second heat exchanger 22 to perform synchronous heat dissipation on the two ends of the cell 10 in the first direction A and the two sides in the third direction C and improve the heat dissipation efficiency of the cell 10, thereby achieving balanced heat dissipation of the cell 10 in the third direction C and improving the heat dissipation capability of a battery device 100.

In some embodiments, the first heat exchanger 21 is not communicated with the second heat exchanger 22. Thus, the heat dissipation efficiency of two ends of the cell 10 in the first direction A can be improved.

In some embodiments, as shown in FIG. 17 to FIG. 19, a flow direction of heat exchange fluid in the first heat exchanger 21 is opposite to that of heat exchange fluid in the second heat exchanger 22. For example, in the first direction A of the cell 10, the heat exchange fluid inside the second heat exchanger 22 may flow from left to right, and the heat exchange fluid inside the first heat exchanger 21 may flow from right to left. Thus, flow directions of the heat exchange fluid in the first heat exchanger 21 and the second heat exchanger 22 are opposite. Heat dissipation velocity of the cell 10 on the two sides of the cell 10 can be increased, and uneven heat dissipation of the two ends of the cell 10 in the third direction C caused by a fact that the heat exchange fluid on the two sides of the cell 10 flow in the same direction can be avoided, so that possibility of thermal expansion of a portion of the cell 10 caused by the uneven heat dissipation can be reduced, the battery device 100 has a more efficient heat dissipation capability, and use safety and use reliability of the battery device 100 are improved.

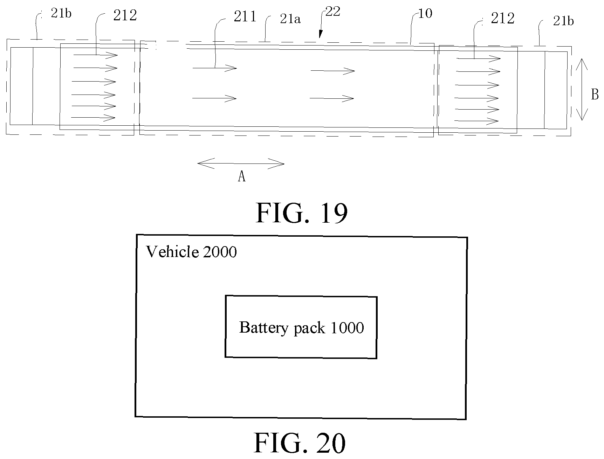

In some embodiments, as shown in FIG. 18 and FIG. 19, each first heat exchanger 21 extends in the first direction A, and each first heat exchanger 21 is internally provided with a first heat exchange flow channel 211 and a second heat exchange flow channel 212 extending in the first direction A. Each second heat exchanger 22 extends in the first direction A, and each second heat exchanger 22 is internally provided with a first heat exchange flow channel 211 and a second heat exchange flow channel 212 extending in the first direction A. Thus, the first heat exchange flow channels 211 and the second heat exchange flow channels 212 are provided in the first heat exchanger 21 and the second heat exchanger 22, which can facilitate flowing of the heat exchange fluid in the heat exchange flow channels to take away the heat of the cell 10 transferred to the heat exchanger, so as to achieve heat dissipation of the cell 10 and ensure the use safety of the battery device 100.

Further, in combination with FIG. 16 to FIG. 19, multiple first heat exchange flow channels 211 are provided. The multiple first heat exchange flow channels 211 are spaced away in the second direction B. Multiple second heat exchange flow channels 212 are provided. The multiple second heat exchange flow channels 212 are spaced away in the second direction B. Thus, the multiple first heat exchange flow channels 211 and the multiple second heat exchange flow channels 212 are provided, and the multiple first heat exchange flow channels 211 and the multiple second heat exchange flow channels 212 are respectively spaced away in the second direction B, so that flow area of the heat exchange fluid in the first heat exchange flow channels 211 and the second heat exchange flow channels 212 can be increased, flow velocity of the heat exchange fluid in the first heat exchange flow channels 211 and the second heat exchange flow channels 212 can be reduced, and flow time of the heat exchange fluid in the heat exchange flow channels can be prolonged, which facilitates taking away the heat dissipated by the cell 10 by the heat exchange fluid and reducing the temperature of the cell 10.

Further, as shown in FIG. 18 and FIG. 19, in the first heat exchanger 21, a volume proportion of the multiple first heat exchange flow channels 211 in the first heat exchange section 21a is less than that of the multiple second heat exchange flow channels 212 in the second heat exchange section 21b. In the second heat exchanger 22, a volume proportion of the multiple first heat exchange flow channels 211 in the first heat exchange section 21a is less than that of the multiple second heat exchange flow channels 212 in the second heat exchange section 21b. In other words, in the first heat exchanger 21, a ratio of a total volume of the multiple first heat exchange flow channels 211 in the first heat exchange section 21a to a volume of the first heat exchange section 21a is less than that of a total volume of all second heat exchange flow channels 212 in the second heat exchange section 21b to a volume of the second heat exchange section 21b. In the second heat exchanger 22, a ratio of a total volume of the multiple first heat exchange flow channels 211 in the first heat exchange section 21a to a volume of the first heat exchange section 21a is less than that of a total volume of all second heat exchange flow channels 212 in the second heat exchange section 21b to a volume of the second heat exchange section 21b. In each of the first heat exchanger 21 and the second heat exchanger 22, a total flow rate of the first heat exchange flow channels 211 in the first heat exchange section 21a is less than that of the second heat exchange flow channels 212 in the second heat exchange section 21b. For example, for the cell 10 with a positive terminal and a negative terminal arranged at two ends, the two second heat exchange sections 21b arranged at the end portions of the heat exchanger 20 are respectively arranged adjacent to the two terminals at the two ends of the cell 10, thereby improving the heat dissipation efficiency near the terminals at the two ends of the cell 10 purposefully. Thus, the heat exchange capabilities of respective first heat exchange sections 21a of the first heat exchanger 21 and the second heat exchanger 22 are lower than those of respective second heat exchange section 21b of the first heat exchanger 21 and the second heat exchanger 22, so that the two ends of the heat exchanger 20 in the first direction A have a good heat dissipation effect near the terminals of the cell 10.

In some embodiments, in each of the first heat exchanger 21 and the second heat exchanger 22, structural strength of the first heat exchange section 21a is higher than that of at least one second heat exchange section 21b. For example, in the first heat exchanger 21 and the second heat exchanger 22, when a hole diameter of the first heat exchange flow channel 211 is the same as that of the second heat exchange flow channel 212, relatively few first heat exchange flow channels 211 are provided in the first heat exchange section 21a, so that a ratio of a sum of the volumes of the multiple first heat exchange flow channels 211 to the volume of the first heat exchange section 21a is reduced, and the structural strength of the first heat exchange section 21a can be relatively improved. Thus, the structural strength of the first heat exchange section 21a is higher than that of the second heat exchange section 21b, so that the first heat exchange section 21a has good deformation resistance. When the heat exchanger 20 is arranged adjacent to one surface of the cell 10, especially when the heat exchanger 20 is arranged adjacent to a large surface (that is, a surface with maximum area of all surfaces of the cell 10) of the cell 10, a central position of the large surface of the cell is a surface with the highest expansion probability and/or the highest expansion degree during use of the cell 10, so that the structural strength of the first heat exchange section 21a located in the middle of the heat exchanger 20 is higher than that of the second heat exchange section 21b at an end portion, expansion of the cell 10 can be suppressed, and stability of the cell 10 and the heat exchanger 20 can be improved.

According to some embodiments of the present disclosure, in the first heat exchanger 21 and the second heat exchanger 22, a wall thickness of the first heat exchange flow channel 211 of the at least one first heat exchange section 21a is greater than that of the second heat exchange flow channel 212 of the at least one second heat exchange section 21b. That is, in the first heat exchanger 21 and the second heat exchanger 22, the wall thickness of each first heat exchange flow channel 211 corresponding to the first heat exchange section 21a is greater than that of each second heat exchange flow channel 212 corresponding to the second heat exchange section 21b. For example, the flow rate of the heat exchange fluid flowing through the first heat exchange section 21a may be reduced by reducing the quantity of the first heat exchange flow channels 211 in the first heat exchange section 21a, and a wall thickness between two adjacent first heat exchange flow channels 211 in the first heat exchange section 21a may be increased by increasing a distance between an inner side surface of the first heat exchange flow channel 211 and an outer surface of the cell 10 in the third direction C. Thus, the wall thickness of the first heat exchange flow channel 211 corresponding to the first heat exchange section 21a is greater than that of the second heat exchange flow channel 212 corresponding to the second heat exchange section 21b, which can improve the structural strength of the first heat exchange section 21a. When the cell 10 expands and deforms due to heat, the first heat exchanger 21 and the second heat exchanger 22 may better suppress deformation of the cell 10 in the third direction C and enhance protection of the cell 10.

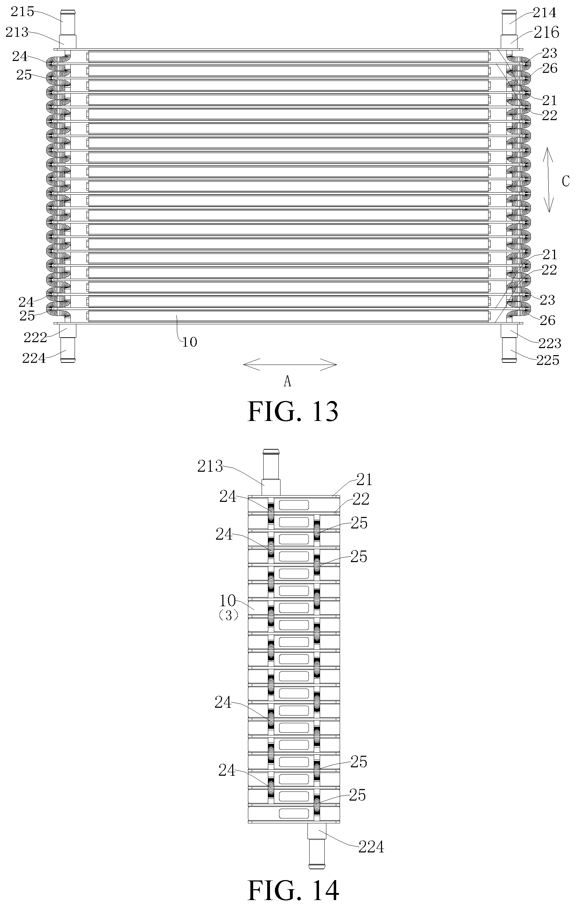

Further, as shown in FIG. 13 and FIG. 14, multiple heat exchangers 20 include multiple first heat exchangers 21 and multiple second heat exchangers 22. The battery pack 1000 further includes a first connecting pipe 23 (for example, as shown in FIG. 13, multiple first connecting pipes 23), a second connecting pipe 24 (for example, as shown in FIG. 13, multiple second connecting pipes 24), a third connecting pipe 25 (for example, as shown in FIG. 13, multiple third connecting pipes 25), and a fourth connecting pipe 26 (for example, as shown in FIG. 13, multiple fourth connecting pipes 26). As an example, each first connecting pipe 23 is connected between the first heat exchange inlets 216 of two adjacent first heat exchangers 21, and each second connecting pipe 24 is connected between the first heat exchange outlets 213 of the two adjacent first heat exchangers 21. Each third connecting pipe 25 is connected between the second heat exchange inlets 222 of two adjacent second heat exchangers 22, and each fourth connecting pipe 26 is connected between the second heat exchange outlets 223 of the two adjacent second heat exchangers 22. In other words, the multiple first heat exchangers 21 and the multiple second heat exchangers 22 are spaced away from one another in the third direction C. Each first heat exchanger 21 is provided with a first heat exchange inlet 216 and a first heat exchange outlet 213. Each second heat exchanger 22 is provided with a second heat exchange inlet 222 and a second heat exchange outlet 223. Two adjacent first heat exchange inlets 216 are connected to each other through the first connecting pipe 23. Two adjacent first heat exchange outlets 213 are connected to each other through the second connecting pipe 24. Two adjacent second heat exchange inlets 222 are connected to each other through the third connecting pipe 25. Two adjacent second heat exchange outlets 223 are connected to each other through the fourth connecting pipe 26. Therefore, the flow direction of the heat exchange fluid in the first heat exchanger 21 is opposite to that of the heat exchange fluid in the second heat exchanger 22 to perform heat dissipation on the cell 10 from the two ends of the cell 10.

Thus, through an arrangement of the first connecting pipe 23 (for example, the multiple first connecting pipes 23), the second connecting pipe 24 (for example, the multiple second connecting pipes 24), the third connecting pipe 25 (for example, the multiple third connecting pipes 25), and the fourth connecting pipe 26 (for example, the multiple fourth connecting pipes 26), the two adjacent first heat exchangers 21 are communicated with each other, and the two adjacent second heat exchangers 22 are communicated with each other, so that the heat exchange fluid entering the heat exchanger 20 enters from different first heat exchange inlets 216 and second heat exchange inlets 222, the heat exchange efficiency of the heat exchanger 20 is improved, a temperature balance at the first heat exchange inlets 216 and the first heat exchange outlets 213 and a temperature balance at the second heat exchange inlets 222 and the second heat exchange outlets 223 are achieved, temperature consistency of the cell 10 can be improved, temperature difference between the two ends of the cell 10 in the length direction and the middle can be minimized, the cell 10 can be protected, and service life of the cell 10 can be prolonged to the greatest extent.

In some embodiments, in combination with FIG. 13 and FIG. 14, the battery pack 1000 further includes a first heat exchanger inlet pipe 214, a second heat exchanger outlet pipe 215, a second heat exchanger inlet pipe 224, and a second heat exchanger outlet pipe 225. The first heat exchanger inlet pipe 214 is connected to the first heat exchange inlet 216 of the first heat exchanger 21 located on the outermost side in the third direction C, the first heat exchanger outlet pipe 215 is connected to the first heat exchange outlet 213 of the first heat exchanger 21 located on the outermost side in the third direction C, and the first heat exchanger outlet pipe 215 and the first heat exchanger inlet pipe 214 are located on the same side in the third direction C. The second heat exchanger inlet pipe 224 is connected to the second heat exchange inlet 222 of the second heat exchanger 22 located on the outermost side in the third direction C, the second heat exchanger outlet pipe 225 is connected to the second heat exchange outlet 223 of the second heat exchanger 22 located on the outermost side in the third direction C, and the second heat exchanger outlet pipe 225 and the second heat exchanger inlet pipe 224 are located on the other side in the third direction C.

In the third direction C, after the multiple cells 10, the multiple first heat exchangers 21, and the multiple second heat exchangers 22 are arranged, the first heat exchange inlet 216 and the first heat exchange outlet 213 of the first heat exchanger 21 located on the outermost side are respectively connected to the first heat exchanger inlet pipe 214 and the first heat exchanger outlet pipe 215, and the second heat exchange inlet 222 and the second heat exchange outlet 223 of the second heat exchanger 22 located on the outermost side are respectively connected to the second heat exchanger inlet pipe 224 and the second heat exchanger outlet pipe 225. The heat exchange fluid inside the multiple first heat exchangers 21 enters from the first heat exchanger inlet pipe 214 and flows out from the first heat exchanger outlet pipe 215, and the heat exchange fluid inside the multiple second heat exchangers 22 enters from the second heat exchanger inlet pipe 224 and flows out from the second heat exchanger outlet pipe 225.

Thus, through an arrangement of the first heat exchanger inlet pipe 214, the first heat exchanger outlet pipe 215, the second heat exchanger inlet pipe 224, and the second heat exchanger outlet pipe 225, the heat exchanger 20 is communicated with an external system, the heat exchange fluid used for cooling is injected, and the heat exchange fluid can flow out smoothly after flowing through the heat exchanger 20 to absorb the heat of the cell 10. In the third direction C, the first heat exchanger inlet pipe 214 and the first heat exchanger outlet pipe 215 are arranged on one side of the cell 10, and the second heat exchanger inlet pipe 224 and the second heat exchanger outlet pipe 225 are arranged on the other side of the cell 10, which facilitates arranging the first heat exchanger 21 and the second heat exchanger 22, reducing space occupied by the external system connected to the first heat exchanger inlet pipe 214 and the first heat exchanger outlet pipe 215, and improving a utilization rate of the space in the battery pack 1000.

Optionally, each first connecting pipe 23, each second connecting pipe 24, each third connecting pipe 25, and each fourth connecting pipe 26 are respectively corrugated pipes. A corrugated pipe is a tubular elastic sensitive element formed by connecting foldable corrugated pieces in folding, stretching, and retracting directions. Alternatively, materials of the first connecting pipe 23 to the fourth connecting pipe 26 may be metal, and shapes of the connecting pipes may be U-shaped. Thus, the first connecting pipe 23 to the fourth connecting pipe 26 use the corrugated pipes, so that elasticity of the connecting pipes can be increased, the first connecting pipe 23 to the fourth connecting pipe 26 have good deformation capabilities, and adjustment of the connecting pipe is facilitated.

In some embodiments, the first heat exchanger 21 is defined with a thickness L1, the second heat exchanger 22 is defined with a thickness L2, and L1 and L2 satisfy: 2 mm≤L1≤5 mm, and 2 mm≤L2≤5 mm. For example, L1=2.5 mm, and L2=2.5 mm. Thus, a thickness of the heat exchanger 20 is relatively small by defining the thicknesses of the first heat exchanger 21 and the second heat exchanger 22. The occupation of internal space of the battery pack 1000 can be effectively reduced when the heat exchanger 20 is placed between adjacent cells 10, which facilitates a miniaturized design of the battery pack 1000. Meanwhile, problems that the structural strength of the first heat exchanger 21 and the second heat exchanger 22 cannot be ensured and the heat dissipation capabilities are weak due to small thicknesses of the first heat exchanger 21 and the second heat exchanger 22 can be avoided.

In some embodiments, as shown in FIG. 16, a first heat conducting piece 51 is arranged between the first heat exchanger 21 and the cell 10, and a second heat conducting piece 52 is arranged between the second heat exchanger 22 and the cell 10. Thus, through an arrangement of the first heat conducting piece 51 and the second heat conducting piece 52, the heat on the cell 10 is transferred to the heat exchanger through the heat conducting pieces, which can improve the heat dissipation efficiency of the cell 10.

In some embodiments, the first heat conducting piece 51 and the second heat conducting piece 52 are respectively heat conductive structure adhesives, heat conductive silicone, or heat conductive silicone grease. The first heat conducting piece 51 and the second heat conducting piece 52 facilitate mounting between the cell 10 and the first heat exchanger 21 and between the cell 10 and the second heat exchanger 22 while dissipating the heat of the cell 10 that is in contact with the first heat conducting piece 51 and the second heat conducting piece 52. The first heat conducting piece 51 and the second heat conducting piece 52 further have insulating property and high temperature resistance. Thus, the first heat conducting piece 51 and the second heat conducting piece 52 use the heat conductive structure adhesive and the like, so that the heat conducting pieces have good heat conductivity, the heat dissipation capability of the cell 10 can be improved, structural strength and stability of the battery pack 1000 can be improved.

According to some specific embodiments of the present disclosure, in combination with FIG. 12 to FIG. 19, multiple cell groups 31 are spaced away from one another in the third direction C. One of the first heat exchanger 21 and the second heat exchanger 22 is arranged on one side of each cell group 31 in the third direction C, and the other of the first heat exchanger 21 and the second heat exchanger 22 is arranged on the other side of each cell group 31 in the third direction C. Flow directions of the heat exchange fluid inside the first heat exchanger 21 and the second heat exchanger 22 are opposite to simultaneously perform heat dissipation on the cell 10 in two ends of the first direction A.

As shown in FIG. 20, a vehicle 2000 according to an embodiment in a third aspect of the present disclosure includes the battery pack 1000 according to the embodiments in the second aspect.

The vehicle according to the embodiments of the present disclosure includes the battery pack 1000 according to any of the foregoing embodiments. The heat dissipation capability and the heat dissipation efficiency of the battery pack 1000 are improved, normal operation of the battery pack 1000 is ensured, possibility of safety accidents such as explosions caused by a weak heat dissipation capability of the battery pack is reduced, an endurance capability of the vehicle is improved, service life of the vehicle is prolonged, and use costs and maintenance costs of the vehicle are reduced.

In the descriptions of the present disclosure, it is to be understood that orientation or position relationships indicated by terms such as "center", "longitudinal", "transverse", "length", "width", "thickness", "upper", "lower", "front", "rear", "left", "right", "vertical", "horizontal", "top", "bottom", "inner", "outer", "axial", "radial", and "circumferential" are based on orientation or position relationships shown in accompanying drawings, and are used only for describing the present disclosure and simplifying a description rather than indicating or implying that a referred device or element has to have a particular orientation or has to be constructed and operated in a particular orientation. Therefore, such terms cannot be construed as a limitation to the present disclosure.

In the descriptions of the present disclosure, "a first feature" or "a second feature" may include one or more of the features. In the descriptions of the present disclosure, "multiple" means two or more. In the description of the present disclosure, a first feature is "on" or "below" a second feature may include that the first and second features are in direct contact, or may include that the first and second features are not in direct contact but in contact through additional features between the first feature and the second feature. In the descriptions of the present disclosure, a first feature is "on", "above", or "over" a second feature includes that the first feature is right above and on the inclined top of the second feature or merely indicates that a level of the first feature is higher than that of the second feature.

In the descriptions of this specification, the descriptions of reference terms such as "an embodiment", "some embodiments", "exemplary embodiments", "example", "specific example", or "some examples" mean that specific features, structures, materials or characteristics described with reference to the embodiments or examples are included in at least one embodiment or example of the present disclosure. In this specification, exemplary expressions of the foregoing terms do not necessarily refer to the same embodiment or example.

Although the embodiments of the present disclosure have been shown and described, those of ordinary skill in the art may understand that various modifications, changes, substitutions and variations of the embodiments may be made without departing from the spirit and scope of the present disclose. The scope of the present disclosure is defined by claims and their equivalents.

## Claims

1. A heat exchanger (20), comprising:
a first heat exchange section (21a), the first heat exchange section (21a) being provided with at least one first heat exchange flow channel (211); and
two second heat exchange sections (21b), the two second heat exchange sections (21b) being respectively connected to two ends of the first heat exchange section (21a) in a first direction (A), the second heat exchange section (21b) being provided with at least one second heat exchange flow channel (212), a volume proportion of the second heat exchange flow channel (212) in the at least one second heat exchange section (21b) being greater than that of the first heat exchange flow channel (211) in the first heat exchange section (21a).

2. The heat exchanger (20) according to claim 1, wherein the volume proportion of the second heat exchange flow channel (212) in each second heat exchange section (21b) is greater than that of the first heat exchange flow channel (211) in the first heat exchange section (21a).

3. The heat exchanger (20) according to claim 1 or 2, wherein a plurality of first heat exchange flow channels (211) are provided, a plurality of second heat exchange flow channels (212) are provided, and
a quantity of the first heat exchange flow channels (211) is less than that of the second heat exchange flow channels (212) of the at least one second heat exchange section (21b).

4. The heat exchanger (20) according to any one of claims 1 to 3, wherein the plurality of first heat exchange flow channels (211) are provided, the plurality of second heat exchange flow channels (212) are provided,
the plurality of first heat exchange flow channels (211) are arranged in a second direction (B), the plurality of second heat exchange flow channels (212) are arranged in the second direction (B), and the second direction (B) is perpendicular to the first direction (A).

5. The heat exchanger (20) according to any one of claims 1 to 4, wherein structural strength of the first heat exchange section (21a) is higher than that of the at least one second heat exchange section (21b).

6. The heat exchanger (20) according to any one of claims 1 to 5, wherein a portion of the first heat exchange second (21a) corresponding to the at least one second heat exchange flow channel (212) is of a solid structure.

7. The heat exchanger (20) according to any one of claims 1 to 6, wherein a wall thickness of the at least one first heat exchange flow channel (211) is greater than that of the at least one second heat exchange flow channel (212).

8. The heat exchanger (20) according to any one of claims 1 to 7, wherein each second heat exchange flow channel (212) and each first heat exchange flow channel (211) extend along a straight line of the first direction (A).

9. The heat exchanger (20) according to any one of claims 1 to 8, wherein the first heat exchange section (21a) is spliced with the corresponding second heat exchange sections (21b).

10. The heat exchanger (20) according to any one of claims 1 to 9, wherein the first heat exchange section (21a) and each second heat exchange section (21b) are respectively extrusion molding pieces.

11. A battery pack (1000), comprising:
a cell (10); and
a heat exchanger (20), the heat exchanger (20) being the heat exchanger (20) according to any one of claims 1 to 10, the heat exchanger (20) being configured to perform heat exchange on the cell (10).

12. The battery pack (1000) according to claim 11, comprising:
a cell unit (3), the cell unit (3) comprising a plurality of cell groups (31), each cell group (31) comprising at least one cell (10); and
a plurality of heat exchangers (20), the cell groups (31) being arranged alternately with the heat exchangers (20) in a third direction (C), wherein the third direction (C) is perpendicular to the first direction (A).

13. The battery pack (1000) according to claim 12, wherein a distance between two adjacent heat exchangers (20) gradually increases from a center of the cell unit (3) to two ends of the cell unit (3) in the third direction (C).

14. The battery pack (1000) according to claim 12, wherein
the plurality of heat exchangers (20) comprise a first heat exchanger (21) and a second heat exchanger (22), the first heat exchanger (21) is provided with a first heat exchange inlet (216) and a first heat exchange outlet (213), and the second heat exchanger (22) is provided with a second heat exchange inlet (222) and a second heat exchange outlet (223);
the cell group (31) has the first direction (A) and the third direction (C) perpendicular to each other, the first heat exchanger (21) and the second heat exchanger (22) are arranged in the third direction (C), the first heat exchange inlet (216) and the second heat exchange outlet (223) are located at one end of the heat exchanger (20) in the first direction (A), and the first heat exchange outlet (213) and the second heat exchange inlet (222) are located at the other end of the heat exchanger (20) in the first direction (A); and
the first heat exchanger (21) is arranged on one side of the cell group (31) in the third direction (C), and the second heat exchanger (22) is arranged on the other side of the cell group (31) in the third direction (C).

15. The battery pack (1000) according to claim 14, wherein a flow direction of heat exchange fluid in the first heat exchanger (21) is opposite to that of heat exchange fluid in the second heat exchanger (22).

16. The battery pack (1000) according to claim 14 or 15, wherein the plurality of heat exchangers (20) comprise a plurality of first heat exchangers (21) and a plurality of second heat exchanger (22); the battery pack (1000) further comprising:
a first connecting pipe (23), the first connecting pipe (23) being connected between the first heat exchange inlets (216) of two adjacent first heat exchangers (21);
a second connecting pipe (24), the second connecting pipe (24) being connected between the first heat exchange outlets (213) of the two adjacent first heat exchangers (21);
a third connecting pipe (25), the third connecting pipe (25) being connected between the second heat exchange inlets (222) of two adjacent second heat exchangers (22); and
a fourth connecting pipe (26), the fourth connecting pipe (26) being connected between the second heat exchange outlets (223) of the two adjacent second heat exchangers (22).

17. The battery pack (1000) according to claim 16, further comprising:
a first heat exchanger inlet pipe (214), the first heat exchanger inlet pipe (214) being connected to the first heat exchange inlet (216) of the first heat exchanger (21) located on the outermost side in the third direction (C);
a first heat exchanger outlet pipe (215), the first heat exchanger outlet pipe (215) being connected to the first heat exchange outlet (213) of the first heat exchanger (21) located on the outermost side in the third direction (C), the first heat exchanger outlet pipe (215) and the first heat exchanger inlet pipe (214) being located on the same side in the third direction (C);
a second heat exchanger inlet pipe (224), the second heat exchanger inlet pipe (224) being connected to the second heat exchange inlet (222) of the second heat exchanger (22) located on the outermost side in the third direction (C); and
a second heat exchanger outlet pipe (225), the second heat exchanger outlet pipe (225) being connected to the second heat exchange outlet (223) of the second heat exchanger (22) located on the outermost side in the third direction (C), the second heat exchanger outlet pipe (225) and the second heat exchanger inlet pipe (224) being located on the other side in the third direction (C).

18. The battery pack (1000) according to any one of claims 14 to 17, wherein the first heat exchanger (21) is defined with a thickness L1, the second heat exchanger (22) is defined with a thickness L2, and L1 and L2 satisfy: 2 mm≤L1≤5 mm, and 2 mm≤L2≤5 mm.

19. The battery pack (1000) according to claim 12, wherein the plurality of heat exchangers (20) are arranged in the third direction (C), each heat exchanger (20) is provided with an inlet (233) and an outlet (234) in two ends in the first direction (A), the inlets (233) of the plurality of heat exchangers (20) are located at the same end of the first direction (A) and are communicated with one another, and the outlets (234) of the plurality of heat exchangers (20) are located at the other end of the first direction (A) and are communicated with one another.

20. The battery pack (1000) according to claim 19, further comprising:
a plurality of connecting pipes (35), a connecting pipe of the plurality of connecting pipes (35) located at the inlet (233) being a fluid input pipe (33), a connecting pipe of the plurality of connecting pipes (35) located at the outlet (234) is a fluid output pipe (34), the heat exchangers (20) being communicated with both the fluid input pipe (33) and the fluid output pipe (34).

21. The battery pack (1000) according to any one of claims 11 to 20, further comprising:
a heat conducting piece (5), the heat conducting piece (5) being arranged between the heat exchanger (20) and the cell group (31).

22. A vehicle (2000), comprising the battery pack (1000) according to any one of claims 11 to 21.
